# EUROPEAN PATENT APPLICATION

(11) **EP 4 844 141 A1**
(43) Date of publication of application: **25.11.2026**
(21) Application number: 25741991.1
(22) Date of filing: 16.01.2025
(51) Int. Cl.: E02F 9/00, B60R 16/033

(54) **ELECTRIC WORK MACHINE**

(30) Priority: 17.01.2024 JP 2024005426
(71) Applicant: Hitachi Construction Machinery Co., Ltd., Tokyo 110-0015 (JP)
(72) Inventor: MAKIMURA, Yuki, Tsuchiura-shi, Ibaraki 300-0013 (JP); TSURUGA, Yasutaka, Tsuchiura-shi, Ibaraki 300-0013 (JP)
(74) Representative: MERH-IP Matias Erny Reichl Hoffmann Patentanwälte PartG mbB
(86) International application number: PCT/JP2025/001191
(87) International publication number: WO 2025/154766

(57) **Abstract**

The electric work machine has a vehicle body, and the vehicle body is provided with batteries 112A to 112D, an electric motor, and an inverter that supplies power from the batteries 112A to 112D to the electric motor. Furthermore, it has hub boxes 151A11 and 151A12 connected to the batteries 112A to 112D, and a hub box 151B1 connected to the hub boxes 151A11 and 151A12 and to the inverter. Connectors 151S, 152N, and 152S are attached to the output portion of the hub boxes 151A11 and 151A12 to the hub box 151B1, the input portion of the hub box 151B1 from the hub boxes 151A11 and 151A12, and the output portion of the hub box 151B1 to the inverter, respectively. Additionally, a connection between the hub boxes 151A11 and 151A12 and the hub box 151B1 and a connection between the hub box 151B1 and the inverter are connected by cables 154 via the connectors 151S, 152N, and 152S. This makes it possible to easily change the system output.

## Description

### Technical Field

The present invention relates to an electric work machine, particularly to an electric work machine equipped with a power relay device that relays power when supplying power from a battery to an inverter.

### Background Art

Recently, from the perspective of environmental consideration, electric work machines that operate on electric power are being used. As a drive system for electric work machines, there are those that obtain part of the power used from the power supplied by a battery mounted on the machine body. In this case, the direct current from the battery is converted into alternating current by an inverter, thereby operating the electric motor to operate the electric work machine. At this time, a power relay device may be used to relay power to transmit power from the battery to the inverter.

Patent document 1 discloses a configuration in which a power supply device is installed in the body of a construction machine, comprising a main battery, a sub-battery that receives, stores, and outputs surplus power from the main battery, an inverter with an output portion that converts direct current into alternating current, and a relay interposed between the main battery and the sub-battery that sends surplus power from the main battery to the sub-battery, prevents backflow, and sends the stored power of the sub-battery to the inverter when needed.

### CITATION LIST

### Patent Literature

Patent Literature 1: JP-H11-8945

### Summary of the Invention

### Problems to be Solved by the Invention

When performing operations such as excavation and travel with an electric work machine, the work is usually performed with the load assumed at the rated output, but situations may arise where work under heavy load that cannot be handled by the rated output is required. In electric work machines that operate on electric power, it is conceivable to temporarily increase the system output above the rated level by changing the number of mounted batteries, which are the power source, to accommodate work under heavy load. However, if the system output is changed by increasing or decreasing the number of mounted batteries, the change in vehicle body weight due to the increase or decrease in the number of batteries may affect the center of gravity of the vehicle body, compromising vehicle body stability and potentially affecting work. In addition, when changing the output, it is also possible that changes in the wiring connected to the battery may occur. However, changing the wiring according to the work is complicated, and there is also a risk of electric shock if the worker touches the battery terminals.

The present invention has been made in view of such problems, and its purpose is to provide an electric work machine capable of easily changing the system output.

### Means for Solving the Problems

To solve the above problems, the electric work machine of the present invention includes: a vehicle body, the vehicle body including a battery, an electric motor, and an inverter that supplies electric power from the battery to the electric motor; a first power relay device connected to the battery; and a second power relay device connected to the first power relay device and to the inverter, wherein connectors are attached to the output portion of the first power relay device to the second power relay device, the input portion of the second power relay device from the first power relay device, and the output portion of the second power relay device to the inverter, respectively; and a plurality of cables that establish a connection between the first power relay device and the second power relay device and a connection between the second power relay device and the inverter via the plurality of connectors. In this case, by installing a plurality of power relay devices that supply power from the battery to the inverter and replacing the power relay device not directly connected to the battery with one having other wiring, the system output can be easily changed.

Here, for example, the battery and the first power relay device are connected by a cable via a terminal or a connector attached to each of the battery and the first power relay device. In this case, the connection between the battery and the first power relay device can be facilitated. Also, for example, the output portion of the battery to the first power relay device is a terminal, and the input portion of the first power relay device from the battery is a connector. In this case, the connection between the battery and the first power relay device can be further facilitated. Furthermore, for example, a plurality of batteries are included, the first power relay device is connected to each of the plurality of batteries, and the second power relay device changes series-parallel connections of the plurality of batteries. In this case, appropriate output changes according to the work can be easily made.

Moreover, for example, a plurality of batteries are included, the first power relay device is connected to each of the plurality of batteries, and the second power relay device changes the number of parallel connections of the plurality of batteries. In this case, when a battery that cannot be used due to a failure or the like occurs, the unusable battery can be disconnected.

Also, for example, the second power relay device is installed at a position more outward than the first power relay device with respect to the center of the vehicle body. In this case, the second power relay device can be easily replaced.

Furthermore, for example, a cover that serves as an exterior of the vehicle body, wherein the cover is formed with a maintenance access opening, and the second power relay device is installed closer to the access opening than the first power relay device. In this case, the second power relay device can be easily replaced using the access opening.

Then, for example, an insulation degradation sensor that monitors the insulation resistance between the vehicle body and the battery is provided, and the insulation degradation sensor is installed in the second power relay device. In this case, even in electric construction machine used with increased or decreased system output, it is possible to easily detect when the insulation of the circuit has deteriorated.

### Advantages of the Invention

According to the present invention, it is possible to provide an electric work machine capable of easily changing the system output.

### Brief Description of the Drawings

[FIG. 1] FIG. 1 is a diagram showing an electric excavator according to the present embodiment.
[FIG. 2] FIGS. 2(a), (b) are diagrams showing a first example of wiring between a high voltage storage battery and a hub box, and wiring inside the hub box.
[FIG. 3] FIGS. 3(a), (b) are diagrams showing a second example of wiring between a high voltage storage battery and a hub box, and wiring inside the hub box.
[FIG. 4] FIG. 4(a) is a diagram showing a third example of wiring between a high voltage storage battery and a hub box, and wiring inside the hub box. FIG. 4(b) is a diagram showing a fourth example of wiring between a high voltage storage battery and a hub box, and wiring inside the hub box.
[FIG. 5] FIG. 5(a) is a diagram showing a fifth example of wiring between a high voltage storage battery and a hub box, and wiring inside the hub box. FIG. 5(b) is a diagram showing a sixth example of wiring between a high voltage storage battery and a hub box, and wiring inside the hub box.
[FIG. 6] FIGS. 6(a) to (c) are diagrams showing a seventh example of wiring between a high voltage storage battery and a hub box, and wiring inside the hub box. Among these, FIG. 6(a) is a diagram similar to the case shown in FIG. 2(a). FIG. 6(b) is a first example showing a case where the battery is disconnected. FIG. 6(c) is a second example showing a case where the battery is disconnected.
[FIG. 7] FIG. 7 is a third example showing a case where the battery is disconnected.
[FIG. 8] FIGS. 8(a) to (d) are diagrams showing the position where the hub box is installed in the electric excavator.
[FIG. 9] FIGS. 9(a), (b) are diagrams showing the position where the hub box is installed in the electric excavator.
[FIG. 10] FIGS. 10(a), (b) are diagrams showing the position where the insulation deterioration sensor is arranged.

### Modes for Carrying the Invention

Hereinafter, the embodiments of the present invention will be described in detail with reference to the accompanying drawings.

### <Description of the configuration of electric excavator 100>

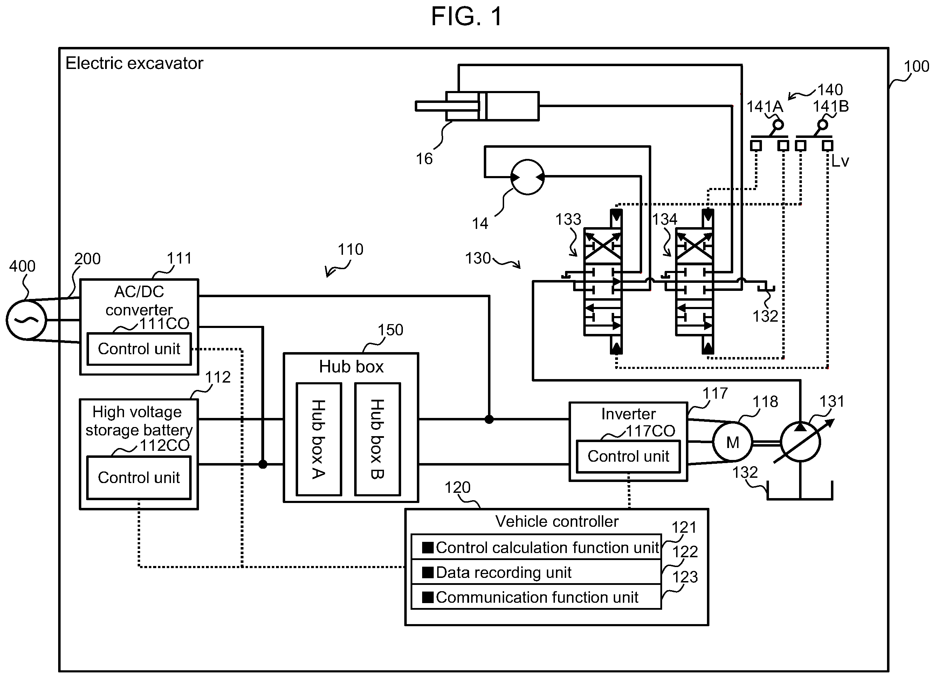

FIG. 1 is a diagram showing the electric excavator 100 of the present embodiment. The electric excavator 100 shown in FIG. 1 is an example of an electric work machine with a vehicle body. However, the electric work machine to which this embodiment is applied is not limited to the electric excavator 100 and can be construction machinery such as wheel loaders, bulldozers, and crane trucks. Additionally, the electric work machine may be a truck for transporting gravel or the like. Furthermore, for example, the electric work machine may be agricultural machinery such as felling machines, logging machines, tractors, forest work vehicles, and skidders.

The illustrated electric excavator 100 is supplied with power from the grid power supply 400 via the power cable 200. Additionally, the electric excavator 100 is also supplied with power from the high voltage battery 112. That is, the electric excavator 100 is configured to use the power from the onboard battery while receiving power from the grid power supply 400. However, in this embodiment, the power supplied to the electric excavator 100 may not be used, and it may be supplied only from the high voltage battery 112.

The electric excavator 100 includes a high voltage circuit 110, a vehicle control device 120, a hydraulic circuit 130, and an operation system 140. The illustrated electric excavator 100 controls the power supplied to the high voltage circuit 110 from the power cable 200 by the vehicle control device 120 to drive the electric motor 118, which is the power source. The high voltage circuit 110 receives power from the grid power supply 400 and includes an AC/DC converter 111 that converts the AC power supplied from the power cable 200 into DC power, a high voltage battery 112 that stores power as an example of a battery, an inverter 117 as an example of an inverter device that converts the DC power from the AC/DC converter 111 and the high voltage battery 112 into AC power, an electric motor 118 driven by the AC power supplied from the inverter 117, and a hub box 150.

The hub box 150 relays the power from the high voltage battery 112 and supplies it to the inverter 117. The detailed configuration of the hub box 150 will be described later.

The vehicle control device 120 changes the power received from the grid power supply 400 during the operation of the electric excavator 100. Then, the power received from the grid power supply 400 (the upper limit of the received power) is adjusted by the AC/DC converter 111. For example, the power received from the grid power supply 400 can be adjusted by adjusting the resistance value in the current limiting circuit of the AC/DC converter 111. The vehicle control device 120 includes a control calculation function section 121, a data recording section (memory) 122, and a communication function section 123. The control calculation function section 121 performs calculations to control the AC/DC converter 111, the high voltage battery 112, and the inverter 117. The AC/DC converter 111, the high voltage battery 112, and the inverter 117 are each equipped with control units (controllers) 111CO, 112CO, and 117CO. The control units 111CO, 112CO, and 117CO send data representing the states of the AC/DC converter 111, the high voltage battery 112, and the inverter 117 to the control calculation function section 121. The control calculation function section 121 performs calculations based on the transmitted data and sends control signals for controlling the AC/DC converter 111, the high voltage battery 112, and the inverter 117 to the control units 111CO, 112CO, and 117CO. When adjusting the power received from the grid power supply 400, the vehicle control device 120 sends a command, and the control unit 111CO of the AC/DC converter 111 receives the command. Then, the settings of the AC/DC converter 111 are changed, thereby changing the power received from the grid power supply 400. The data recording section (memory) 122 records program data for the control calculation function section 121 to perform calculations. The communication function section 123 is a communication interface used when sending control signals to the control units 111CO, 112CO, and 117CO.

The hydraulic circuit 130 includes a hydraulic pump 131 that generates hydraulic pressure, a hydraulic fluid tank 132 that stores hydraulic fluid, a first directional control valve 133, and a second directional control valve 134. The hydraulic pump 131 is a variable displacement hydraulic pump driven by the electric motor 118. This hydraulic pump 131 draws hydraulic fluid from the hydraulic fluid tank 132 and supplies it to the swing motor 14 and the hydraulic cylinder 16 for the work device of the electric excavator 100 via the first directional control valve 133 and the second directional control valve 134, thereby operating the electric excavator 100.

The operation system 140 is installed in the operating room of the electric excavator 100 and is used by the operator when operating the electric excavator 100. The operation system 140 includes a work mode selection switch, a motor control dial (not shown) for setting the speed of the electric motor 118, and operation levers 141A, 141B, etc. The operation levers 141A, 141B correspond to the respective swing motor 14 and work device hydraulic cylinder 16, and, for example, electric levers that output electrical operation signals (lever signals Lv) according to the amount of operation are used.

### <Description of the configuration of hub box 150>

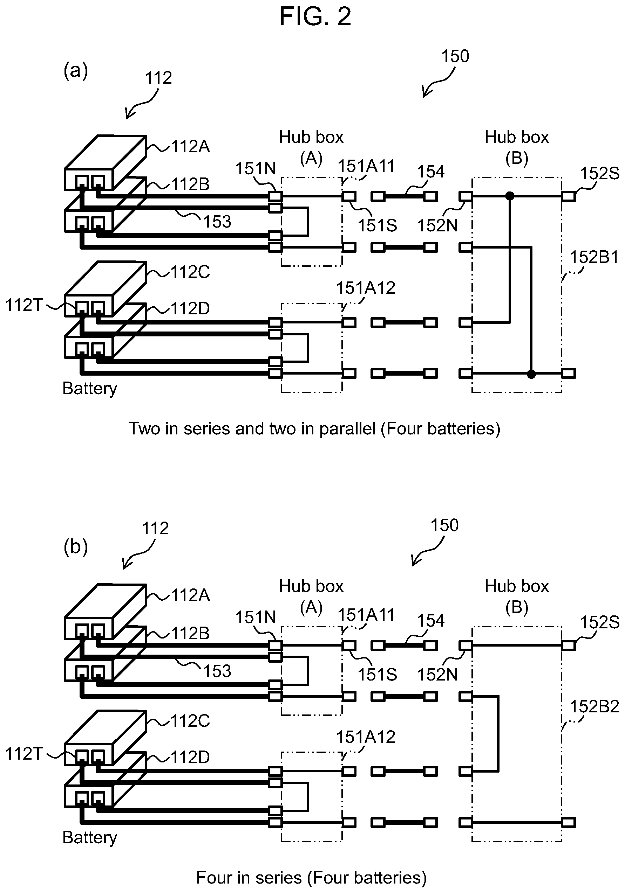

Next, a detailed explanation of the configuration of the hub box 150 will be provided. FIGS. 2(a) and (b) show the first example of the wiring between the high voltage battery 112 and the hub box 150, and the wiring inside the hub box 150. In FIG. 2(a), four batteries 112A to 112D are shown as the high voltage battery 112 on the left side of FIG. 2(a). Also in FIG. 2(a), the hub box 150 is shown from the center to the right side, and hub boxes 151A11, 151A12 of hub box (A), and hub box 152B1 of hub box (B) are shown.

The batteries 112A to 112D and the hub boxes 151A11, 151A12 are connected by eight cables 153. In this case, the eight cables 153 are connected using terminals 112T, which are attached two each to the batteries 112A to 112D, and connectors 151N, which are attached four each to each of the hub boxes 151A11, 151A12 on one side (left side in FIG. 2(a)). In this case, the batteries 112A to 112D are connected to the cables 153 via the terminals 112T, but they may also be connected to the cables 153 via connectors (not shown) attached to the batteries 112A to 112D.

The hub boxes 151A11, 151A12 and the hub box 152B1 are connected by four cables 154. In this case, the four cables 154 are connected using connectors 151S, which are attached four each to each of the hub boxes 151A11, 151A12 on the other side (right side in FIG. 2(a)), and connectors 152N, which are attached four to one side (left side in FIG. 2(a)) of the hub box 152B1.

Although not shown, a cable connected to the inverter 117 side is connected to the right side of the hub box 152B1 in FIG. 2(a). This cable is connected using two connectors 152S attached to the other side (right side in FIG. 2(a)) of the hub box 152B1.

In this configuration, the power transmitted from the batteries 112A to 112D is sequentially transmitted through hub box 151A11 or hub box 151A12, and hub box 152B1, and is then supplied to the inverter 117. Therefore, the hub box 150 serves as a power relay device that relays power from the batteries 112A to 112D to supply it to the inverter 117.

The configuration of the hub box 150 shown in FIG. 2(a) can also be described as follows. Hub boxes 151A11, 151A12 function as the first power relay device connected to the batteries 112A to 112D. Hub box 152B1 functions as a second power relay device connected to the hub boxes 151A11 and 151A12, which are first power relay devices, and the inverter 117. Connectors are attached to the output portions of the hub boxes 151A11 and 151A12 to hub box 152B1, the input portions of the hub box 152B1 from hub boxes 151A11, 151A12, and the output portion of the hub box 152B1 to the inverter 117. These connectors are connector 151S, connector 152N, and connector 152S, respectively. The connection between hub boxes 151A11, 151A12 and hub box 152B1, as well as the connection between hub box 152B1 and the inverter 117, is connected by cables via the connectors. In other words, the connection between hub boxes 151A11, 151A12 and hub box 152B1 is connected by the cable 154 via the connectors 151S, 152N. Additionally, the connection between the hub box 152B1 and the inverter 117 is connected by the connector 152S and the cable connected to the inverter 117 side as mentioned above. The batteries 112A to 112D and the hub boxes 151A11, 151A12 are connected by a cable 153 via a terminal or a connector attached to each. However, in FIG. 2(a), the output portion from batteries 112A to 112D to hub boxes 151A11, 151A12 is terminal 112T, and the input portion from batteries 112A to 112D to hub boxes 151A11, 151A12 is connector 151N.

FIG. 2(b) shows the case where the hub box 152B1 is replaced with the hub box 152B2, compared to FIG. 2(a). The hub box 152B2 has the same number and position of connectors 152N as the hub box 152B1, but the internal wiring state is different. Hub boxes 152B1 and 152B2 are detachable, and it is possible to replace hub box 152B1 with hub box 152B2. Conversely, it is also possible to replace the hub box 152B2 with the hub box 152B1. In other words, among the hub boxes 150, the wiring state of hub boxes 151A11 and 151A12 is fixed, but hub boxes 152B1 and 152B2 can be replaced with ones having different wiring states.

Then, in FIG. 2(a), for the four batteries 112A to 112D, the wiring can be configured as two in series and two in parallel. This allows the voltage of two batteries to be output from the hub box 150 to the inverter 117. On the other hand, in FIG. 2(b), the four batteries 112A to 112D can be wired in a series of four (four in series and one in parallel). This allows the voltage of four batteries to be output from the hub box 150 to the inverter 117.

In other words, the configurations in FIGS. 2(a) and (b) can be described as hub boxes 151A11 and 151A12 being connected to each of a plurality of batteries 112A to 112D, and hub boxes 152B1 and 152B2 changing series-parallel connections of a plurality of batteries 112A to 112D. In this configuration, it can be said that the series-parallel arrangement of the batteries 112A to 112D can be changed by replacing the hub box 152B1 with one having a different wiring state. In this case, the hub boxes 151A11 and 151A12 serve the role of consolidating the voltage necessary to operate the electric excavator 100. Hub boxes 151A11 and 151A12 are installed to obtain the voltage necessary to operate the electric excavator 100 at its rated output. Additionally, hub boxes 152B1 and 152B2 serve the role of varying the voltage consolidated by hub boxes 151A11 and 151A12. In other words, during normal operation, when operating the electric excavator 100 at rated output, the wiring state should use the hub box 152B1 shown in FIG. 2(a). On the other hand, when work under heavy load that cannot be handled by the rated output of the electric excavator 100 is required, the hub box 152B1 in FIG. 2(a) is replaced with hub box 152B2, and the wiring state shown in FIG. 2(b) is used with the hub box 152B2. This allows for easy switching between operating the electric excavator 100 at its normal rated output and operating it under heavy load output that cannot be handled by the rated output, simply by exchanging the hub box 152B1 and hub box 152B2, which are the second power relay devices, without changing the number of installed batteries.

Additionally, since the first power relay device, hub boxes 151A11 and 151A12, and the second power relay device, hub boxes 152B1 and 152B2, are connected by the connector 151S and the connector 152N, the removal and reconnection of cable 154 is easy. Therefore, the task of changing the wiring can be simplified. As a result, the first power relay device, hub boxes 151A11 and 151A12, and the second power relay device, hub boxes 152B1 and 152B2, are connected by the connector 151S and the connector 152N. Therefore, it becomes unnecessary to open hub boxes 151A11 and 151A12, and hub boxes 152B1 and 152B2, or use tools to change the terminal connections of cable 154, making it easier to remove and reconnect cable 154. Furthermore, when changing the system output, the worker only needs to remove and reconnect the cable 154 connected by the connector and replace the hub boxes 152B1, 152B2, which are the second power relay devices, so there is no need to touch the terminals 112T of the batteries 112A to 112D. Therefore, electric shock from batteries 112A to 112D can be prevented. Each of the four cables 154 uses the connectors 151S and 152N, which are installed in the same number and position, even if the hub box 152B1 is replaced with the hub box 152B2. Therefore, it is possible to prevent cable 154 from being connected to the wrong connector, which enhances safety. Furthermore, the same applies to the cables connecting the hub boxes 152B1, 152B2 and the inverter 117.

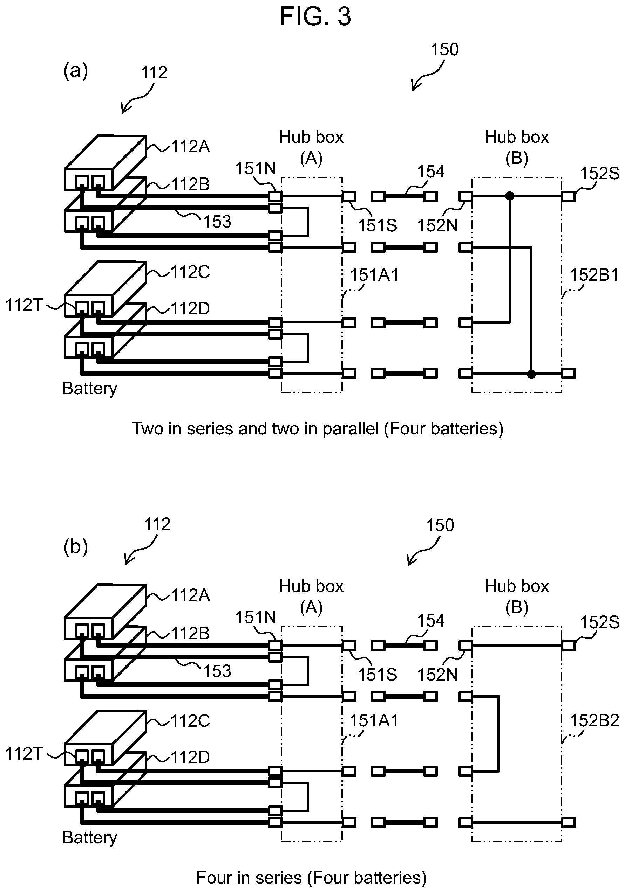

FIGS. 3(a) and 3(b) illustrate a second example of the wiring between the high voltage battery 112 and the hub box 150, as well as the wiring inside the hub box 150. Comparing FIGS. 3(a), (b) with FIGS. 2(a), (b), in FIGS. 3(a), (b), the two hub boxes 151A11, 151A12 are combined into one, forming hub box 151A1, while the rest remains the same.

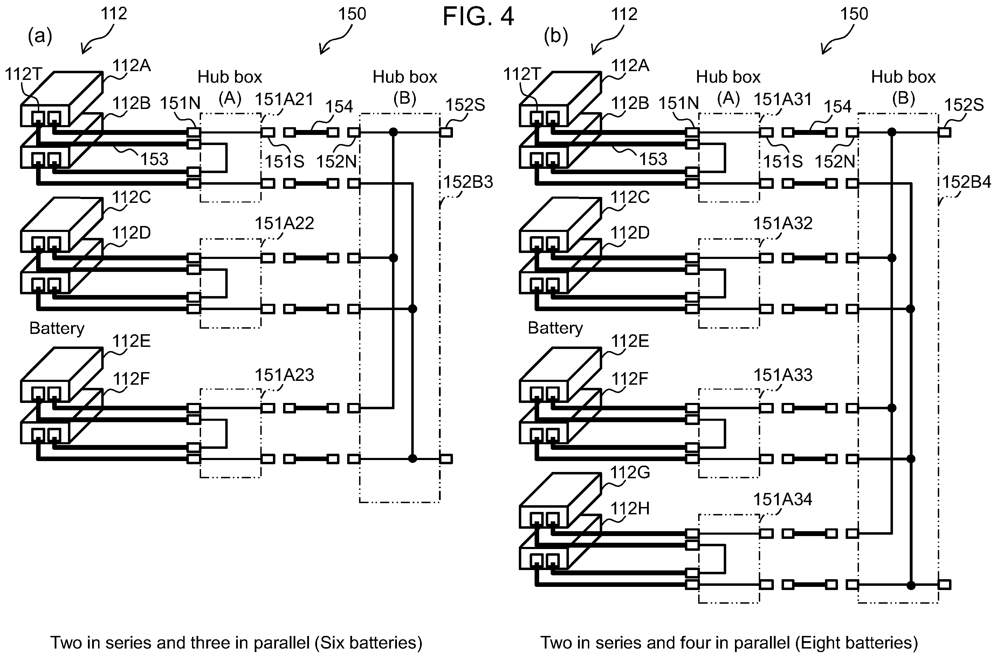

FIG. 4(a) is a diagram showing the third example of wiring between the high voltage storage battery 112 and the hub box 150, as well as the wiring inside the hub box 150. This third example has a normal rated output in the electric excavator 100 that is larger than that shown in FIG. 2(a). Comparing FIG. 4(a) with FIG. 2(a), the high voltage battery 112 has increased from four batteries 112A to 112D to the six batteries 112A to 112F. Additionally, in response to this, the two hub boxes 151A11, 151A12 have increased to three hub boxes 151A21 to 151A23. Then, the hub box 152B3 is wired in a configuration of two in series and three in parallel for the six batteries 112A to 112F. Furthermore, cable 153 has increased from eight to twelve, and cable 154 has increased from four to six.

FIG. 4(b) is a diagram showing a fourth example of the wiring between the high voltage storage battery 112 and the hub box 150, as well as the wiring inside the hub box 150. This fourth example has a normal rated output in the electric excavator 100 that is even greater than that of the third example. Comparing FIG. 4(b) with FIG. 2(a), the high voltage battery 112 has increased from four batteries 112A to 112D to eight batteries 112A to 112H. Additionally, in response to this, the two hub boxes 151A11, 151A12 have increased to four hub boxes 151A31 to 151A34. Then, the hub box 152B4 is wired in a configuration of two in series and four in parallel for the eight batteries 112A to 112H. Furthermore, cable 153 has increased from eight to sixteen, and cable 154 has increased from four to eight.

In FIG. 4(a), the six batteries 112A to 112F are configured in a two in series and three in parallel wiring. This allows the voltage of two batteries to be output from the hub box 150 to the inverter 117. Additionally, in FIG. 4(b), the eight batteries 112A to 112H are configured in a two in series and four in parallel wiring. This allows the voltage of two batteries to be output from the hub box 150 to the inverter 117. Even in the case of FIGS. 4(a) and (b), by replacing the hub box 152B3 or the hub box 152B4 with ones having different wiring configurations, it is possible to change the series-parallel arrangement of the batteries 112A to 112F. In the case of FIG. 4(a), by replacing the hub box 152B3, it is possible to configure the wiring, for example, as six series (six in series and one in parallel). Additionally, in the case of FIG. 4(b), by replacing the hub box 152B4, it is possible to configure the wiring, for example, as four in series and two in parallel or eight in series (eight in series and one in parallel).

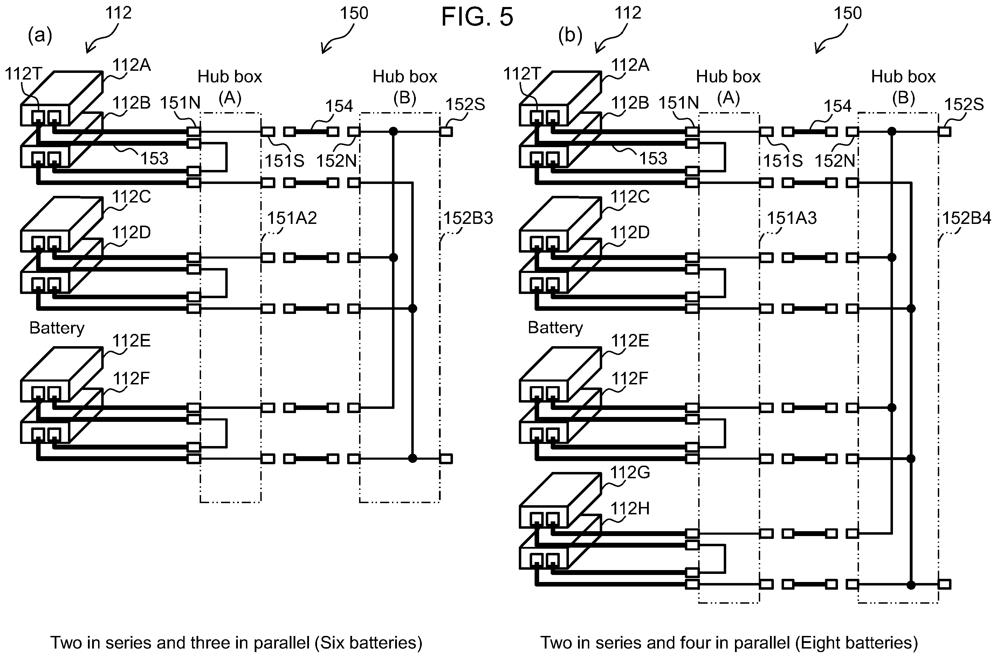

FIG. 5(a) is a diagram showing the fifth example of wiring between the high voltage storage battery 112 and the hub box 150, as well as the wiring inside the hub box 150. The fifth example differs from the third example in that the three hub boxes 151A21 to 151A23 are combined into a single hub box 151A2, while the rest is the same. FIG. 5(b) is a diagram showing the sixth example of wiring between the high voltage storage battery 112 and the hub box 150, as well as the wiring inside the hub box 150. The sixth example differs from the fourth example in that, in FIG. 5(b), the four hub boxes 151A31 to 151A34 are combined into a single hub box 151A3, while the rest is the same.

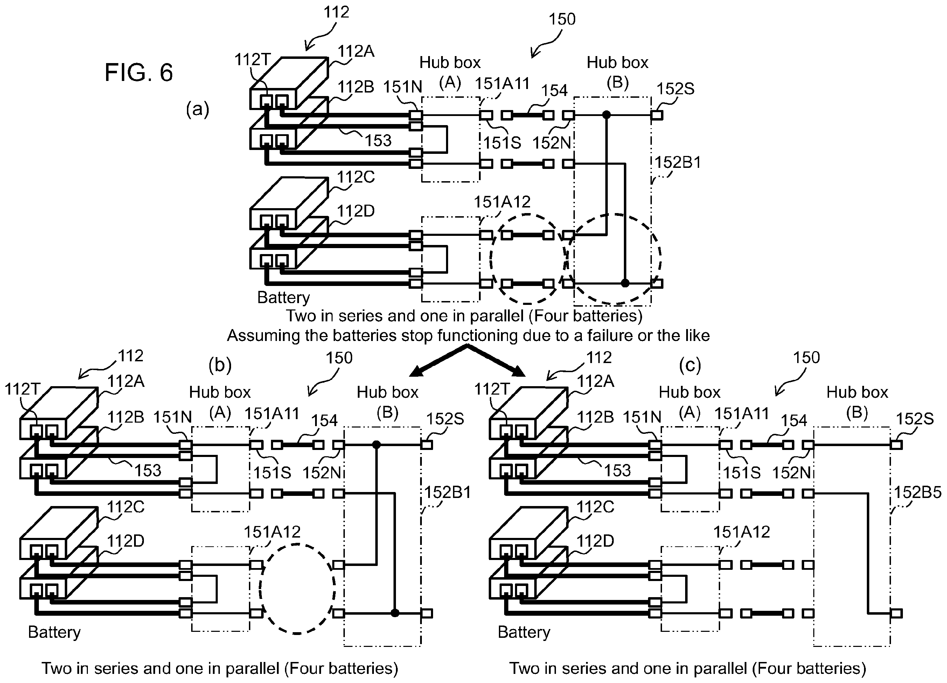

FIGS. 6(a) to (c) illustrate the seventh example of the wiring between the high voltage battery 112 and the hub box 150, as well as the wiring inside the hub box 150. Among these, FIG. 6(a) is a diagram similar to the one shown in FIG. 2(a). Here, it is assumed that at least one of the batteries 112C and 112D has stopped functioning due to a failure or the like. In this case, the operation to disconnect the battery 112C and the battery 112D is performed.

FIG. 6(b) is a first example showing the case of disconnecting the battery 112C and the battery 112D. Here, it shows the case where the two lower cables 154 shown in FIG. 6(a) are removed to disconnect batteries 112C and 112D, resulting in two in series and one in parallel wiring configuration. This cable 154 is a cable connected via a connector to the hub box 151A12 and the hub box 152B1, and is easily detachable.

Additionally, FIG. 6(c) is a second example showing the case of disconnecting the battery 112C and the battery 112D. Here, it shows the case where the batteries 112C and 112D are disconnected by replacing the hub box 152B1 with the hub box 152B5, changing the wiring from two in series and two in parallel to two in series and one in parallel. In this configuration, it can be said that the hub boxes 151A11 and 151A12 are connected to each of the plurality of batteries 112A to 112D, and hub boxes 152B1 and 152B5 change the number of parallel connections of the plurality of batteries 112A to 112D. Additionally, in this configuration, it is possible to change the number of connected batteries 112A to 112D by replacing the hub box 152B1 with one that has a different wiring state. In this way, even when disconnecting a battery that cannot be used due to battery failure or the like, it is sufficient to simply remove and reconnect the cable 154 connected by the connector and replace the hub boxes 152B1 and 152B5, which are the second power relay devices, making the work simpler. Furthermore, the worker only needs to remove and reconnect the cable 154 connected by the connector and replace the hub boxes 152B1 and 152B5, which are the second power relay devices, so they do not touch the terminals 112T of the batteries 112A to 112D. Therefore, it is possible to prevent electric shock from batteries 112A to 112D.

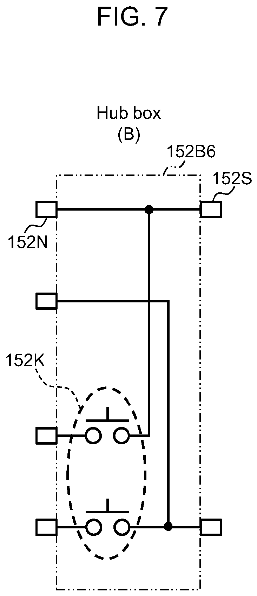

Additionally, FIG. 7 is a third example showing the case of disconnecting the battery 112C and the battery 112D. In this case, by using the hub box 152B6, which has two circuit breakers 152K installed inside the hub box 152B6, and turning off the circuit breakers 152K, it is possible to achieve wiring similar to the hub box 152B5 in FIG. 6(c). This allows the disconnection of the battery 112C and the battery 112D, enabling two in series and one in parallel wiring configuration.

### <Description of the position where the hub box 150 is installed>

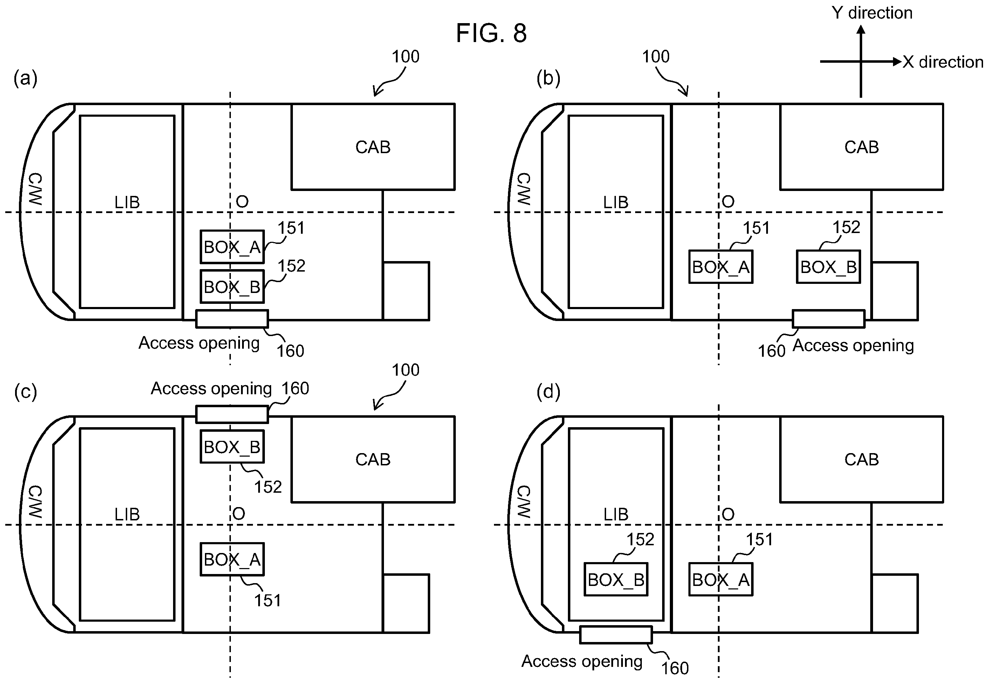

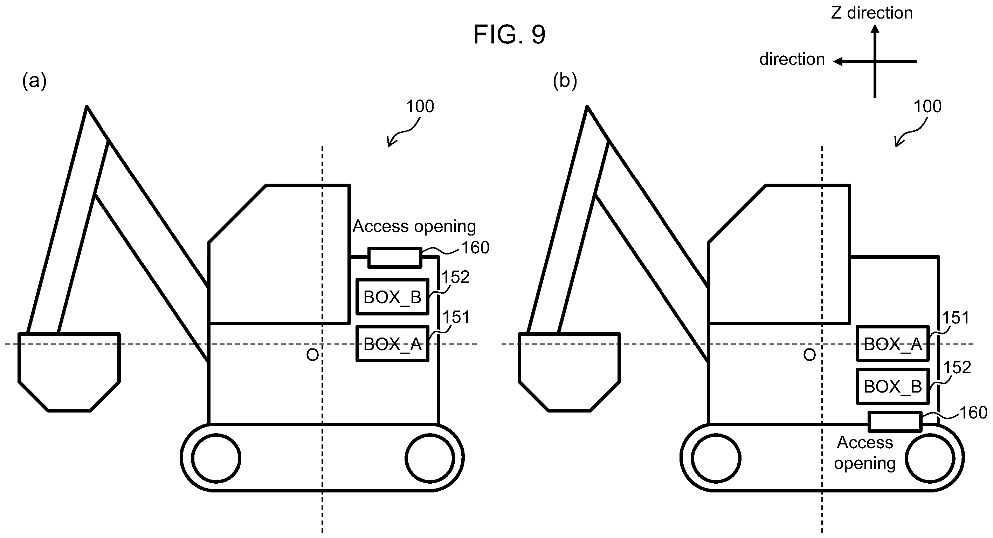

FIGS. 8(a) to (d), and FIGS. 9(a) and (b) are diagrams showing the position where the hub box 150 is installed in the electric excavator 100. In FIGS., CAB is the operating room. Also, LIB is a lithium-ion battery, which is the aforementioned battery. Furthermore, C/W is the counterweight. In FIGS., the X direction is the direction from the rear to the front of the vehicle body of the electric excavator 100. The Y direction is the direction from the right to the left of the vehicle body of the electric excavator 100. The Z direction is the direction from the bottom to the top of the vehicle body of the electric excavator 100. Among these, FIGS. 8(a) to (d) are diagrams showing the position where the hub box 150 is installed when viewed from above the electric excavator 100. FIGS. 9(a) and (b) are diagrams showing the position where the hub box 150 is installed when viewed from the side of the electric excavator 100. Here, BOX_A is the aforementioned first power relay device, which is the hub boxes 151A1 to 151A3, 151A11 to 151A12, 151A21 to 151A23, and 151A31 to 151A34. If the hub boxes 151A1 to 151A3, 151A11 to 151A12, 151A21 to 151A23, and 151A31 to 151A34 are not distinguished, they may be simply referred to as hub box 151 hereafter. Also, BOX_B is the aforementioned second power relay device, which is the hub boxes 152B1 to 152B6. If the hub boxes 152B1 to 152B6 are not distinguished, they may be simply referred to as hub box 152 hereafter.

As illustrated in FIGS. 8 and 9, the hub box 152 is installed at a position more outward than the hub box 151 with respect to the center O of the vehicle body and closer to the access opening 160 formed in the vehicle body. The electric excavator 100 has a cover that serves as the exterior of the vehicle body, and the cover is formed with an access opening 160 as an opening for maintenance. The access opening 160 is fitted with a door, lid, etc., and is normally closed by these. However, during maintenance, etc., opening these allows access to the interior of the electric excavator 100. In other words, from the perspective of ease of attachment and detachment, it is preferable that the hub box 152 is installed at a position more outward than the hub box 151 with respect to the center O of the vehicle body and closer to the access opening 160.

In the case of FIG. 8(a), the access opening 160 is formed in the central part of the right side of the vehicle body, and the hub box 152 is installed adjacent to the access opening 160. On the other hand, the hub box 151 is installed more inward of the vehicle body than the hub box 152, and the hub box 152 is installed at a position more outward relative to the center O of the vehicle body than the hub box 151. Additionally, the hub box 152 is installed at a position closer to the access opening 160 than the hub box 151.

In the case of FIG. 8(b), the access opening 160 is formed in the front part of the right side of the vehicle body, and the hub box 152 is installed adjacent to the access opening 160. On the other hand, the hub box 151 is installed more rearward of the vehicle body than the hub box 152, and the hub box 152 is installed at a position more outward relative to the center O of the vehicle body than the hub box 151. Additionally, the hub box 152 is installed at a position closer to the access opening 160 than the hub box 151.

In the case of FIG. 8(c), the access opening 160 is formed in the central part of the left side of the vehicle body, and the hub box 152 is installed adjacent to the access opening 160. On the other hand, the hub box 151 is installed at a position closer to the right side than the left side of the vehicle body, and the hub box 152 is installed at a position more outward relative to the center O of the vehicle body than the hub box 151. Additionally, the hub box 152 is installed at a position closer to the access opening 160 than the hub box 151.

In the case of FIG. 8(d), the access opening 160 is formed in the rear part of the right side of the vehicle body, and the hub box 152 is installed adjacent to the access opening 160. On the other hand, the hub box 151 is installed at a central position in the longitudinal direction of the vehicle body, and the hub box 152 is installed at a position more outward relative to the center O of the vehicle body than the hub box 151. Additionally, the hub box 152 is installed at a position closer to the access opening 160 than the hub box 151.

In the case of FIG. 9(a), the access opening 160 is formed in the rear part of the top surface of the vehicle body, and the hub box 152 is installed adjacent to the access opening 160. On the other hand, the hub box 151 is installed at a central position in the vertical direction of the vehicle body, and the hub box 152 is installed at a position more outward relative to the center O of the vehicle body than the hub box 151. Additionally, the hub box 152 is installed at a position closer to the access opening 160 than the hub box 151.

In the case of FIG. 9(b), the access opening 160 is formed in the rear part of the bottom surface of the vehicle body, and the hub box 152 is installed adjacent to the access opening 160. On the other hand, the hub box 151 is installed at a central position in the vertical direction of the vehicle body, and the hub box 152 is installed at a position more outward relative to the center O of the vehicle body than the hub box 151. Additionally, the hub box 152 is installed at a position closer to the access opening 160 than the hub box 151.

### <Description of Insulation degradation sensor>

It is preferable for the hub box 152 to be equipped with an insulation degradation sensor. An insulation degradation sensor is a sensor that monitors the insulation resistance between the vehicle body and the high voltage battery 112, and outputs a warning signal when the insulation resistance deteriorates.

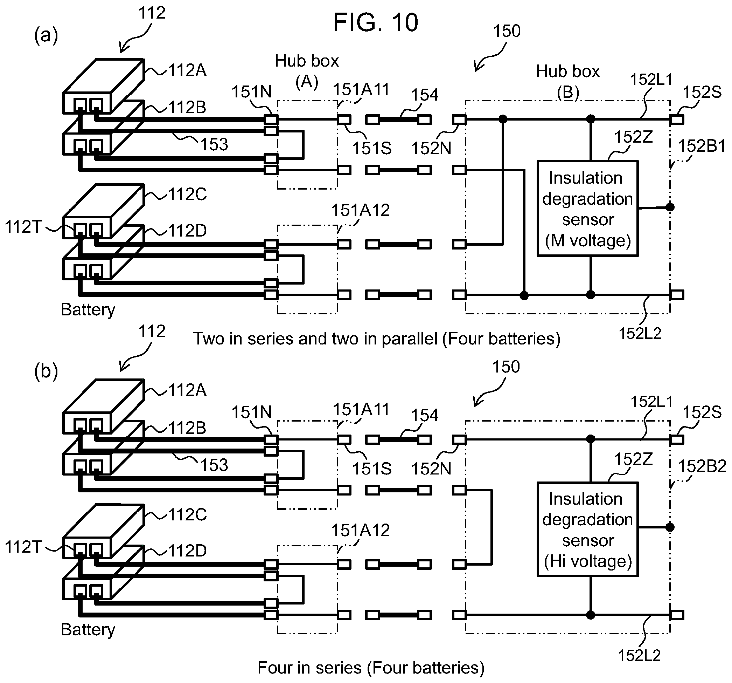

FIGS. 10(a) and (b) are diagrams showing the positions where the insulation degradation sensor 152Z is installed. Among these, FIG. 10(a) shows an example where the insulation degradation sensor 152Z is attached to the hub box 152B1 shown in FIG. 2(a). Additionally, FIG. 10(b) shows an example of an insulation degradation sensor 152Z attached to the hub box 152B2 shown in FIG. 2(b). In any case, the insulation degradation sensor 152Z is arranged to be connected to the transmission lines 152L1 and 152L2 supplied to the inverter 117.

As shown in these examples, it is preferable for the insulation degradation sensor 152Z to be arranged in the hub box 152 rather than the hub box 151. As a specification of the insulation degradation sensor 152Z, it is necessary to use one that matches the voltage used. In other words, it is necessary to use the insulation degradation sensor 152Z that matches the voltage output to the inverter 117. In the case of FIG. 10(a), it is configured as two in series and two in parallel, where the voltage used here is the voltage of two batteries output to the inverter 117, as mentioned above. Additionally, in the case of FIG. 10(b), there are four in series, and the voltage used here is the voltage of four batteries output to the inverter 117, as mentioned above. And the hub box 152 has a circuit configuration that changes this voltage. Therefore, if an insulation degradation sensor 152Z that matches the voltage used in each case is attached to the hub box 152, when the hub box 152 is replaced, an appropriate insulation degradation sensor 152Z will be automatically attached, so to speak. In this case, the insulation degradation sensor 152Z attached to the hub box 152B2 is selected to have a higher voltage specification than the insulation degradation sensor 152Z attached to the hub box 152B1. In FIG. 10(a), an insulation degradation sensor 152Z compatible with M (Middle) voltage is used. In FIG. 10(b), it indicates the use of a high voltage compatible insulation degradation sensor 152Z for higher voltage specifications.

As described above, the embodiment of the present invention has been explained, but the technical scope of the present invention is not limited to the scope described in the above embodiment. It is evident from the description in the claims that various modifications or improvements made to the above embodiments are also included within the technical scope of the present invention.

### Description of Reference Characters

100: Electric excavator, 110: High voltage circuit, 111: AC/DC converter, 112: High voltage storage battery, 112A-112H: Battery, 112T: Terminal, 151N, 151S, 152N, 152S: Connector, 117: Inverter, 120: Vehicle control device, 151A1-151A3, 151A11-151A12, 151A21-151A23, 151A31-151A34: Hub box (first power relay device), 152B1-152B6: Hub box (second power relay device), 152Z: Insulation deterioration sensor, 153, 154: Cable, 160: Access opening

## Claims

1. An electric work machine comprising:
a vehicle body, the vehicle body including a battery, an electric motor, and an inverter that supplies electric power from the battery to the electric motor;
a first power relay device connected to the battery; and a second power relay device connected to the first power relay device and to the inverter, wherein
connectors are attached respectively to:
an output portion of the first power relay device connected to the second power relay device,
an input portion of the second power relay device connected to the first power relay device, and
an output portion of the second power relay device connected to the inverter,
and
a connection between the first power relay device and the second power relay device and a connection between the second power relay device and the inverter are connected by cables via the connectors.

2. The electric work machine according to claim 1, wherein
the battery and the first power relay device are connected by a cable via a terminal or a connector attached to each of the battery and the first power relay device.

3. The electric work machine according to claim 2, wherein
an output portion of the battery to the first power relay device is the terminal, and an input portion of the first power relay device from the battery is the connector.

4. The electric work machine according to claim 1, wherein
the battery includes a plurality of batteries,
the first power relay device is connected to each of the plurality of batteries, and
the second power relay device changes series-parallel connections of the plurality of batteries.

5. The electric work machine according to claim 1, wherein
the battery includes a plurality of batteries,
the first power relay device is connected to each of the plurality of batteries, and
the second power relay device changes the number of parallel connections of the plurality of batteries.

6. The electric work machine according to claim 1, wherein
the second power relay device is installed at a position more outward than the first power relay device with respect to a center of the vehicle body.

7. The electric work machine according to claim 1, further comprising:
a cover that serves as an exterior of the vehicle body, wherein
the cover is formed with a maintenance access opening, and
the second power relay device is installed closer to the access opening than the first power relay device.

8. The electric work machine according to claim 1, further comprising:
an insulation degradation sensor that monitors insulation resistance between the vehicle body and the battery, wherein
the insulation degradation sensor is installed in the second power relay device.
